# EUROPEAN PATENT APPLICATION

(11) **EP 1 311 118 A1**
(43) Date of publication of application: **14.05.2003**
(21) Application number: 01956830.2
(22) Date of filing: 10.08.2001
(51) Int. Cl.: H04N 5/44, H04N 5/00, H04Q 9/00, G06F 13/00

(54) **CONTROL DEVICE, CONTROLLED DEVICE WITH PASSING-THROUGH FUNCTION, CONTROLLED DEVICE, CONTROL METHOD, MEDIUM AND PROGRAM**

(30) Priority: 18.08.2000 JP 2000248941
(71) Applicant: MATSUSHITA ELECTRIC INDUSTRIAL CO., LTD., Kadoma-shi, Osaka 571-8501 (JP)
(72) Inventor: TAKECHI, Hideaki, Toyonaka-shi, Osaka 560-0012 (JP); YAMADA, Masazumi, Moriguchi-shi, Osaka 570-0011 (JP); IITSUKA, Hiroyuki, Katano-shi, Osaka 576-0033 (JP)
(74) Representative: Grünecker, Kinkeldey, Stockmair & Schwanhäusser Anwaltssozietät
(86) International application number: JP0106891
(87) International publication number: WO02017624

(57) **Abstract**

According to the HAVi standard, a situation that a signal input from an input terminal of an AV apparatus is output from an output terminal of the same AV apparatus as it is or after its form is converted cannot be clearly shown. A controlling apparatus 82 controlling at least one controlled apparatus 30 and 75 based on an object-oriented model has a device object corresponding to the controlled apparatus 30 with a pass-through function having as a function element thereof a stream pass-through function to output a stream input from an input terminal from an output terminal as it is or after changing its form, in which a function object 42 corresponding to the pass-through function is provided.

## Description

### TECHNICAL FIELD

The present invention relates to a controlling apparatus that controls a controlled apparatus such as an AV apparatus based on an object-oriented model, the controlled apparatus that is controlled by the controlling apparatus based on the object-oriented model, a controlling method, a medium, and a program.

### BACKGROUND ART

In recent years, a technology of a network interconnecting AV apparatuses has been widespread. An example of such a network is an IEEE 1394 serial bus. In the IEEE 1394 bus, AV apparatuses can be controlled, for example, by use of AV/C commands (AV/C digital interface command set version 2.0). In the AV/C command model, one apparatus (unit) is divided into elements (subunits) constituting it, and each unit or subunit can be controlled independently. For example, it is possible to turn on or off the power of the entire apparatus and to cause one VCR of a dual-deck VCR to perform playback and the other VCR thereof to perform recording.

However, AV/C commands subtly differ among apparatuses. For example, there are cases where an AV/C command to cause a VCR to perform playback is different from an AV/C command to cause a VCR sold by a maker different from the maker of the above-mentioned VCR to perform playback. Therefore, transmission of a playback command capable of causing a VCR to perform playback to a second VCR cannot cause the second VCR to perform playback, because the second VCR cannot accept the playback command.

For this reason, when an AV apparatus is caused to perform a predetermined operation, an application software program controlling the AV apparatus controls the AV apparatus by transmitting action commands matching various AV apparatuses to the AV apparatus until the AV apparatus performs the predetermined operation.

Therefore, it is necessary for application software programs controlling AV apparatuses to be capable of issuing all the commands matching the AV apparatuses. For this reason, increase in the number of kinds of AV apparatuses to be controlled makes it necessary to issue a plurality of kinds of commands to cause an AV apparatus to perform only one operation, so that increase in the trouble and cost for developing the application software programs cannot be avoided.

The HAVi (home AV interoperability) standard is introduced to solve this problem.

The HAVi standard handles functions of AV apparatuses by abstracting them as software objects based on the object orientations, and also determines APIs for handling these software objects. The software objects and the APIs (application programming interfaces) for handling the software objects function as middle ware for absorbing the difference in AV/C command among apparatuses. That is, the application software programs can control the corresponding AV apparatuses by providing an instruction to each software object by use of APIs not depending on the AV apparatuses.

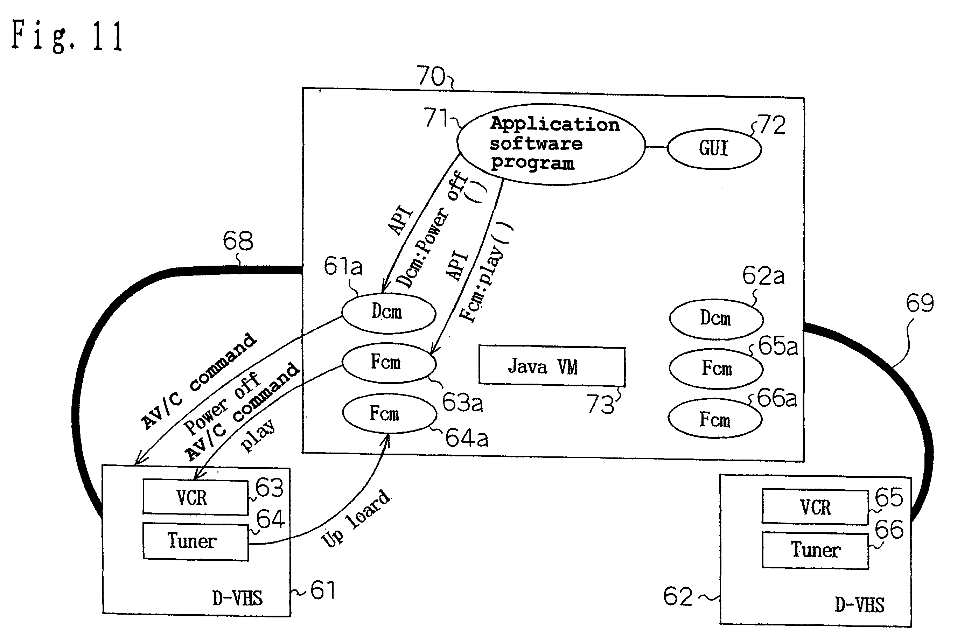

FIG. 11 shows an example of a controlling system that controls AV apparatuses based on the HAVi standard.

The controlling system comprises a TV 70, a D-VHS 61 and a D-VHS 62. These AV apparatuses are interconnected by IEEE 1394 cables 68 and 69.

The TV 70 is a television having a function of a controlling apparatus that controls the D-VHSs 61 and 62.

The D-VHS 61 has a VCR 63 that records or plays back a stream of a broadcast program or the like onto or from a tape medium, and a tuner 64 that receives broadcast waves , demodulates them and outputs a stream of a broadcast program. That is, the D-VHS 61 as a unit has the VCR 63 and the tuner 64 as elements (subunits).

Likewise, the D-VHS 62 has a VCR 65 that records or plays back a stream of a broadcast program or the like onto or from a tape medium, and a tuner 66 that receives broadcast waves, demodulates them and outputs a stream of a broadcast program. That is, the D-VHS 62 as a unit has the VCR 65 and the tuner 66 as elements (subunits).

The software structure of the TV 70 is as follows: The TV 70 has a GUI 72, an application software program 71, a DCM 61a, an FCM 63a, an FCM 63a, an FCM 64a, a DCM 62a, an FCM 65a, an FCM 66a, and a Java virtual machine 73 (hereinafter, referred to as Java VM 73).

The GUI 72 is a graphical user interface described in Java for the user to operate AV apparatuses by use of a remote control of the TV 70.

The application software program 71 is a software program described in Java for controlling AV apparatuses such as the D-VHSs 61 and 62 based on an instruction from the user.

The DCMs 61a and 62a and the Fcms 63a, 64a, 65a and 66a are software object according to the HAVi standard.

Here, a Dcm which refers to a device control module is a software object corresponding to an AV apparatus (unit) . That is, a Dcm is in charge of the entire corresponding AV apparatus (unit).

Moreover, an Fcm which refers to a function component module is a software object corresponding to an element (subunit) of an AV apparatus. That is, an Fcm is in charge of an element (subunit) of the corresponding AV apparatus.

Moreover, the D-VHS 61 stores information for the TV 70 to create such a software object corresponding to the D-VHS 61, and also has a function to communicate with the TV 7.

Likewise, the D-VHS 62 stores information for the TV 70 to create such a software object corresponding to the D-VHS 62, and also has a function to communication with the TV 70.

In FIG. 11, the Dcm 61a corresponds to the D-VHS 61, the Fcm 63a corresponds to the VCR 63, and the Fcm 64a corresponds to the tuner 64. Moreover, the DCM 62a corresponds to the D-VHS 62, the Fcm 65a corresponds to the VCR 65, and the Fcm 66a corresponds to the tuner 66.

The Java VM73 is an interpreter that reads in a program code (bytecode) described in Java and not depending on the model, converts it to a binary code depending on the model, and executes the program code.

Next, the operation of this controlling system will be described.

First, it is assumed that the D-VHS 61 has not been connected to the TV 70 by the cable 68 yet.

Under this condition, the Dcm 61a and the Fcms 63a and 64a are absent in the TV 70.

Then, the user connects the D-VHS 61 to the TV 70 by the cable 68.

Then, the TV 70 and the D-VHS 61 communicate with each other so that the information for creating the Dcm 61a and the Fcms 63a and 64a is uploaded from the D-VHS 61 to the TV 70.

The TV 70 creates the DCM 61a and the Fcms 63a and 64a based on the information uploaded from the D-VHS 61.

Likewise, when the D-VHS 62 has not been connected to the TV 70 by the cable 69 yet, the Dcm 62a and the Fcms 65a and 66a are absent in the TV 70.

When the user connects the D-VHS 62 to the TV 70 by the cable 69, similarly to the above-described case, the Dcm 62a and the Fcms 65a and 66a are created in the TV 70.

According to the HAVi standard, when a content is output as a stream from an AV apparatus to a second AV apparatus, first, it is necessary to form a connection path from the AV apparatus to the second AV apparatus.

The formation of the connection is performed in the following manner: Software objects such as the Dcm 61a and the Fcm 63a have a logical connector called a plug, and the application software program 71 interconnects the plugs of the software objects such as the Dcm 61a and the Fcm 63a to form the connection path. The generation of the connection path will be described later.

Assuming that the connection path has already been formed, a case where the VCR 63 is caused to perform playback will be described.

First, the user provides, by use of the GUI 72, an instruction to cause the VCR 63 to perform playback. Then, the GUI 72 notifies the application software program 71 of the instruction from the user.

Receiving the notification from the GUI 72, the application software program 71 instructs the Fcm 63a to perform playback by use of the API.

Instructed to perform playback by use of the API by the application software program 71, the Fcm 63a transmits to the VCR 63 an AV/C command to instruct it to perform playback.

Receiving the AV/C command to instruct it to perform playback from the Fcm 63a via the cable 68, the VCR 62 interprets the command, and plays back the content recorded on the tape medium.

As described above, to cause the VCR 63 to perform playback, it is necessary for the application software program 71 only to instruct, by use of the API, the Fcm 63a which is the software object corresponding to the VCR 63 to perform playback. Likewise, by the application software program 71 instructing, by use of the API, the Fcm 65a to perform playback, the VCR 65 can be caused to perform playback.

When the user turns off the power of the entire D-VHS 61, it is performed in the following manner:

First, when the user provides an instruction to turn off the D-VHS 61 by use of the GUI 72, the GUI 72 notifies the application software program 71 of the instruction from the user.

Receiving the notification from the GUI 72, the application software program 71 instructs, by use of the API, the Dcm 61a to turn off the power.

Instructed to turn off the power by the application software program 71 by use of the API, the Dcm 61a transmits to the D-VHS 61 an AV/C command to instruct it to turn off the power.

Receiving the AV/C command to instruct it to turn off the power from the Dcm 61a via the cable 68, the D-VHS 61 interprets the command, and turns off the power of the entire D-VHS 61.

As described above, to cause an operation of the entire D-VHS 61 to be performed, it is necessary for the application software program 71 only to instruct, by use of the API, the Dcm 61a which is the software object corresponding to the D-VHS 61 to perform the operation. Likewise, by the application software program 71 instructing, by use of the API, the Dcm 62a to turn off the power, the D-VHS 62 can be turned off.

As described above, the application software program 71 can control each AV apparatus and an element of each AV apparatus only by providing, by use of the API, an operation instruction to the Dcm corresponding to the AV apparatus to be controlled or to the Fcm corresponding to the element of the AV apparatus to be controlled instead of directly issuing an AV/C command to control each AV apparatus. Moreover, since the D-VHS 61 and the D-VHS 62 can be controlled by use of the same API even when the AV-command for the D-VHS 61 is different from that for the D-VHS 62, the application software program 71 can be efficiently developed without any cost or trouble.

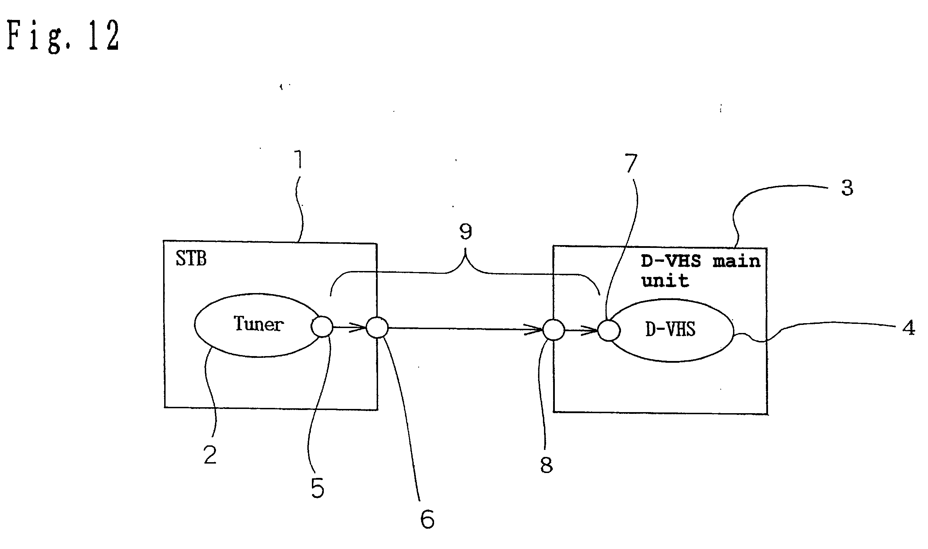

Next, as mentioned above, the formation of the connection between software objects will be described. FIG. 12 shows software objects in a case where a tuner of an STB receives broadcast waves and outputs the demodulated content to a D-VHS as a stream and the D-VHS records the content onto a tape medium. In the example of FIG. 11, these software objects are held by the TV 70. FIG. 12 shows a case where AV apparatuses different from those of FIG. 11 (that is, an STB having a tuner as an element, and a D-VHS main unit having a D-VHS as an element) are connected to the TV 70.

A Dcm 1 of the STB is a Dcm corresponding to an STB (set-top box), and an Fcm 2 of the tuner is an Fcm corresponding to the tuner which is an element of the STB. A Dcm 3 of the D-VHS main unit is a Dcm corresponding to the D-VHS main unit, and an Fcm 4 of the D-VHS is an Fcm corresponding to the D-VHS which is an element of the D-VHS main unit.

The Dcm 1 of the STB has an output plug 6. The Fcm 2 of the tuner has an output plug 5. The Dcm 3 of the D-VHS main unit has a Dcm plug 8 of the D-VHS main unit. The Fcm 4 of the D-VHS has an Fcm plug 7 of the D-VHS.

In this case, the application software program 71 of FIG. 11 connects the plugs by use of the API as shown at a connection 9. The application software program 17 can perform control, after forming such a connection, so that the content obtained by the tuner of the STB receiving broadcast waves and demodulating them is output to the D-VHS as a stream and the D-VHS records the content onto a tape medium by providing instructions to the software objects such as the Fcm 2 of the tuner by use of the API. As described above, according to the HAVi standard, AV apparatuses can be controlled by providing instructions to cause software objects to operate after forming a connection between the software objects.

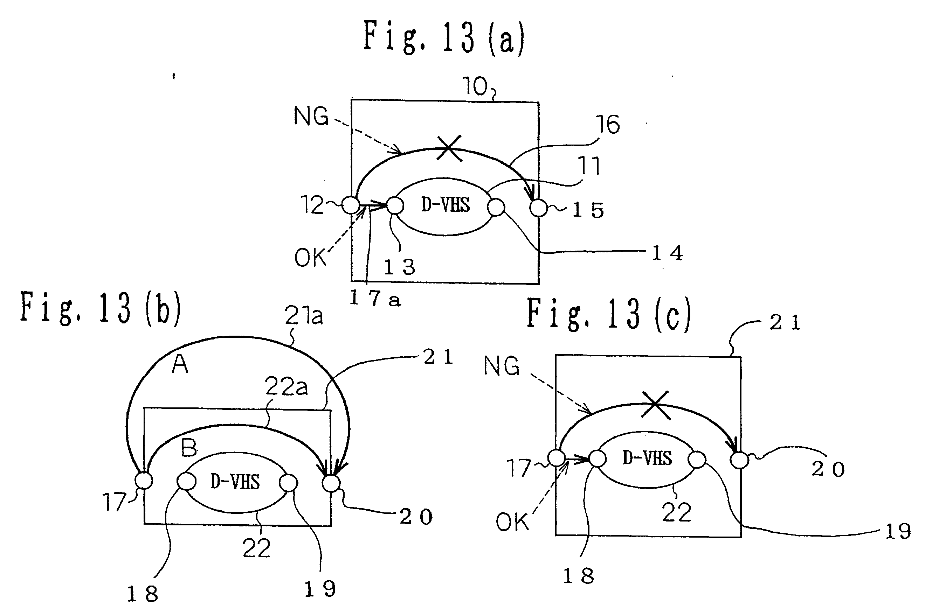

Referring to FIG. 13, the connection according to the HAVi standard will be described in further detail.

(a) of FIG. 13 is a view showing software objects, according to the HAVi standard, of a D-VHS main unit having a D-VHS as an element.

The Dcm 10 is a Dcm corresponding to the D-VHS main unit, and an Fcm 11 is an Fcm corresponding to the D-VHS. The Dcm 10 has a Dcm plug 12 and a Dcm plug 15, and the Fcm 11 has an Fcm plug 13 and an Fcm plug 14.

In (a) of FIG. 13, when the connection is formed, although the Dcm plug 12 and the Fcm plug 13 can be connected together, it is not permitted to connect the Dcm plug 12 and the Dcm plug 15 together. That is, according to the HAVi standard, the connection path is consistently treated as a connection between different objects. Therefore, the connection according to the HAVi standard has a limitation that an internal connection such as a direct connection between the Dcm plug 12 and the Dcm plug 15 is not permitted.

The provision of such a limitation simplifies the operation to form the connection by using a common simple API. That is, an Fcm-Fcm connection is made by Connect(FcmPlug, FcmPlug), and an Fcm-Dcm connection is made by Connect(FcmPlug, DcmPlug).

Further, the following troubles that can occur when Connect (DcmPlug, DcmPlug) is used can be avoided: (b) of FIG. 13 shows the hardware structure corresponding to (a) of FIG. 13. The D-VHS main unit 21 has an apparatus input terminal 17 and an apparatus output terminal 20, and also has a D-VHS 22 as an element. It is assumed that the above-mentioned limitation is absent. That is, it is assumed that the Dcm plug 12 and the Dcm plug 15 can be connected together. However, when the Dcm plug 12-and the Dcm plug 15 are connected together, it is unclear whether this connection represents a path 21a or a path 22a in terms of hardware.

Here, the path 21a is a path from the apparatus input terminal 17 to the apparatus output terminal 20 via the outside of the D-VHS main unit 21, and the path 22a is a path from the apparatus input terminal 17 to the apparatus output terminal 20 via the inside of the D-VHS main unit 21.

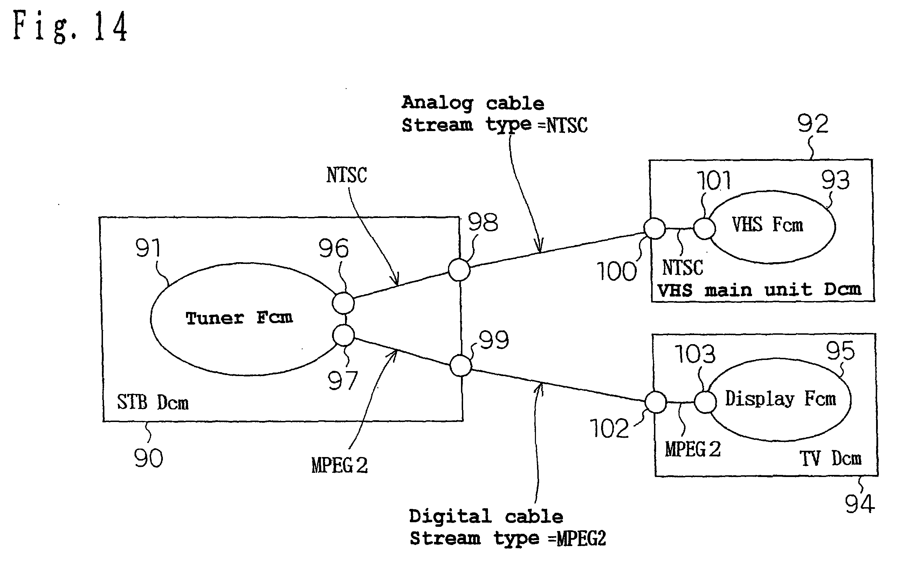

Moreover, in the connection according to the HAVi standard, a stream type is set for each connection. This will be described by use of FIG. 14.

FIG. 14 is a view showing an example of connections between an STB Dcm 90, a VHS main unit Dcm 92, a TV Dcm 94, a tuner Fcm 91, a VHS Fcm 93 and a display Fcm 95.

In FIG. 14, two connections are formed. That is, a connection is formed from an output Fcm plug 96 of the tuner Fcm 91 via an output Dcm plug 98 of the STB Dcm 90 and a Dcm input plug 100 of the VHS main unit Dcm 92 to an input Fcm plug 101 of the VHS Fcm 93. Moreover, a connection is formed from an output Fcm plug 97 of the tuner Fcm 91 via an output Dcm plug 99 of the STB Dcm 90 and an input Dcm plug 102 of the TV Dcm 94 to an input Fcm plug 95 of the display Fcm 95. The stream type of the former connection is NTSC, whereas the stream type of the latter connection is set to MPEG 2.

According to the HAVi standard, a stream type is set for each connection like this. Moreover, stream types are set by the Fcm plugs of the source and the sink, and these must be the same.

FIG. 14 shows a case where one content is output from the tuner Fcm 91 in two kinds of stream types, NTSC and MPEG2. When it is intended to output one content in a plurality of stream types like this, according to the HAVi standard, one connection is required for each stream type. Thus, according to the HAVi standard, since one plug has one stream type, an advantage is obtained that the connection management is simplified.

However, in actual D-VHSs, there are cases where an input signal to the apparatus is input to the tape of the D-VHS and the same signal is connected to the apparatus output. This occurs, for example, when a program being recorded is displayed on a TV while the stream of the program is being recorded by the D-VHS.

That is, there can be a case where a signal is input from the apparatus input terminal 17 via a D-VHS input terminal 18 to the D-VHS and the signal input from the apparatus input terminal 17 is output to the apparatus output terminal 20 as it is as shown in (c) of FIG. 13.

However, according to the HAVi standard, this case cannot be expressed because the connection from a Dcm plug to a Dcm plug of the same apparatus cannot be expressed.

That is, the HAVi standard faces a problem (first problem) that a situation that a signal input from an input terminal of an AV apparatus is output from an output terminal of the same AV apparatus as it is or after its form is converted cannot be clearly shown.

On the other hand, in the example of FIG. 14, when a content is sent out, it is necessary to assign the content to a plurality of output Fcm plugs by a sending API. This makes the sending API complicated compared to a case where the number of output Fcm plugs is one.

That is, the HAVi standard faces a problem (second problem) that the API for sending out a content is complicated compared to a case where the number of output Fcm plugs is one because, when one content is output in a plurality of stream types, it is necessary to assign the content to a plurality of Fcm plugs.

Moreover, in the case of apparatuses capable of outputting a plurality of contents at the same time such as hard disks recording and playing back AV data, the number of plugs to which the content is assigned increases, so that the management of each content is complicated.

That is, the HAVi standard faces a problem (third problem) that the content management is complicated when a plurality of contents are output at the same time.

From the viewpoint of the application, when one content is output in a plurality of stream types, since a connection is required for each stream type, how many contents are sent out cannot be determined only by the connection form.

That is, the HAVi standard faces a problem (fourth problem) that how many contents are actually sent out cannot be determined by the connection form.

### DISCLOSURE OF INVENTION

In view of the above-mentioned first problem, an object of the present invention is to provide a controlling apparatus capable of clearly showing a situation that a signal input from an input terminal of an AV apparatus is output from an output terminal of the same AV apparatus as it is or after its form is converted, a controlled apparatus with a pass-through function, a controlled apparatus, a controlling method, a medium, and a program.

Moreover, in view of the above-mentioned second problem, an object of the present invention is to provide a controlling apparatus in which the API is not complicated even when one content is output in a plurality of stream types, a controlled apparatus with a pass-through function, a controlled apparatus, a controlling method, a medium, and a program.

Moreover, in view of the third problem, an object of the present invention is to provide a controlling apparatus in which the content management is not complicated even when a plurality of contents is output at the same time, a controlled apparatus with a pass-through function, a controlled apparatus, a controlling method, a medium, and a program.

Moreover, in view of the fourth problem, an object of the present invention is to provide a controlling apparatus in which how many contents are actually sent out can be determined only by the connection form, a controlled apparatus with a pass-through function, a controlled apparatus, a controlling method, a medium, and a program.

The 1st invention of the present invention (corresponding to claim 1) is a controlling apparatus controlling at least one controlled apparatus based on an object-oriented model,
said controlling apparatus comprising controlling means of providing an instruction to a device object corresponding to the controlled apparatus and/or a function object corresponding to each function element of the controlled apparatus to thereby control the controlled apparatus corresponding to the object and/or the function element of the controlled apparatus,
wherein for the device object corresponding to the controlled apparatus with a pass-through function having as a function element thereof a stream pass-through function to output a stream input from an input terminal from an output terminal as it is or after changing its form,
a function object corresponding to the pass-through function is provided.

The 2nd invention of the present invention (corresponding to claim 2) is a controlling apparatus according to the 1st invention, wherein an input plug of the function object corresponding to the pass-through function is always connected to one input plug of the device object corresponding to the controlled apparatus with the pass-through function, and
wherein the output plug of the function object corresponding to the pass-through function is connected to no output plug of the device object corresponding to the controlled apparatus with the pass-through function, or is connectable to at least one output plug of the device object corresponding to the controlled apparatus with the pass-through function.

The 3rd invention of the present invention (corresponding to claim 3) is a controlling apparatus according to the 2nd invention, wherein the output plug of the function object corresponding to the pass-through function is not connected to a plug of the function object corresponding to another function element of the controlled apparatus with the pass-through function.

The 4th invention of the present invention (corresponding to claim 4) is a controlling apparatus according to the 2nd invention, wherein the function object corresponding to the pass-through function has an ID for a distinction from other kinds of objects.

The 5th invention of the present invention (corresponding to claim 5) is a controlling apparatus according to the 3rd invention, wherein the function object corresponding to the pass-through function has an ID for a distinction from other kinds of objects.

The 6th invention of the present invention (corresponding to claim 6) is a controlled apparatus with a pass-through function, controlled by the controlling apparatus according to any of the 1st to 5th inventions,
said controlled apparatus with a pass-through function, having as a function element thereof a stream pass-through function to output a stream input from an input terminal from an output terminal as it is or after changing its form, and
comprising storing means of storing a function object corresponding to the pass-through function or information for creating the function object, and
wherein the function object or the information for creating the function object is read out by the controlling apparatus.

The 7th invention of the present invention (corresponding to claim 7) is a controlling apparatus controlling at least one controlled apparatus based on an object-oriented model,
said controlling apparatus comprising controlling means of providing an instruction to a device object corresponding to the controlled apparatus and/or a function object corresponding to each function element of the controlled apparatus to thereby control the controlled apparatus corresponding to the device object and/or the function element of the controlled apparatus corresponding to the function object,
wherein when the function element is controlled so as to output a content in one or a plurality of forms, an output plug of the function object corresponding to the controlled function element is assigned to the content by the controlling means.

The 8th invention of the present invention (corresponding to claim 8) is a controlling apparatus according to the 7th invention, wherein the form of the content which a connection between the assigned output plug and an output plug of the device object corresponding to the controlled apparatus having the function element has is set so as to be the same as a connection from the output plug of the device object corresponding to the controlled apparatus having the function element to an input plug of a device object corresponding to another controlled apparatus.

The 9th invention of the present invention (corresponding to claim 9) is a controlling apparatus according to the 8th invention,
comprising an API specifying a plug of the device object and a plug of the function object and registering the form of the content for a connection between the plugs,
wherein the controlling means performs the setting by use of the API.

The 10th invention of the present invention (corresponding to claim 10) is a controlling apparatus according to the 7th invention, wherein the controlling means sets all forms that the content can take, as a form of the content which a connection between the assigned output plug and an output plug of the device object corresponding to the controlled apparatus having the function element has, and
wherein as a form of the content which a connection from the output plug of the device object corresponding to the controlled apparatus having the function element to an input plug of a device object corresponding to another controlled apparatus has, a form of the content to be processed by the connection is set.

The 11th invention of the present invention (corresponding to claim 11) is a controlling apparatus according to the 7th invention, wherein the controlling means sets one of forms that the content can take, as a form of the content which a connection between the assigned output plug and an output plug of the device object corresponding to the controlled apparatus having the function element has, and
wherein as a form of the content which a connection from the output plug of the device object corresponding to the controlled apparatus having the function element to an input plug of a device object corresponding to another controlled apparatus has, a form of the content to be processed by the connection is set.

The 12th invention of the present invention (corresponding to claim 12) is a controlling apparatus according to the 10th invention,
comprising an API specifying a plug of the device object or a plug of the function object and registering the form of the content,
wherein the controlling means performs the setting by use of the API.

The 13th invention of the present invention (corresponding to claim 13) is a controlling apparatus according to the 11th invention,
comprising an API specifying a plug of the device object or a plug of the function object and registering the form of the content,
wherein the controlling means performs the setting by use of the API.

The 14th invention of the present invention (corresponding to claim 14) is a controlling apparatus according to the 7th invention, wherein when connecting plugs of function objects corresponding to at least two function elements belonging to the same controlled apparatus, the controlling means sets, as a form of the content, a form representing that the content is processed inside the apparatus.

The 15th invention of the present invention (corresponding to claim 15) is a controlling apparatus according to the 14th invention, wherein the setting is performed without the use of the API setting the form of the content.

The 16th invention of the present invention (corresponding to claim 16) is a controlled apparatus controlled by the controlling apparatus according to any of the 7th to 15th inventions,
said controlled apparatus comprising storing means of storing a device object corresponding to the controlled apparatus and/or information for creating a function object corresponding to a function element of the controlled apparatus, and
wherein the object or the information for creating the object is read out by the controlling apparatus.

The 17th invention of the present invention (corresponding to claim 17) is a controlling apparatus according to any of the 1st to 5th and the 7th to 15th inventions, wherein the controlling means is a program code described in a virtual language and capable of being executed without depending on a specific model.

The 18th invention of the present invention (corresponding to claim 18) is a controlling apparatus according to any of the 1st to 5th and the 7th to 15th inventions, wherein the device object corresponding to the controlled apparatus is a DCM of a HAVi standard corresponding to the controlled apparatus, and the function obj ect corresponding to a function element of the controlled apparatus is an FCM of the HAVi standard corresponding to the function element.

The 19th invention of the present invention (corresponding to claim 19) is a controlling method of controlling a controlled apparatus by a controlling apparatus controlling at least one controlled apparatus based on an object-oriented model,
said controlling apparatus comprising controlling means of providing an instruction to a device object corresponding to the controlled apparatus and/or a function object corresponding to each function element of the controlled apparatus to thereby control the controlled apparatus corresponding to the object and/or the function element of the controlled apparatus,
wherein for a device object corresponding to a controlled apparatus with a pass-through function having as a function element thereof a streampass-through function to output a stream input from an input terminal from an output terminal as it is or after changing its form, a function obj ect corresponding to the pass-through function is provided.

The 20th invention of the present invention (corresponding to claim 20) is a controlling method according to the 19th invention, wherein an input plug of the function object corresponding to the pass-through function is always connected to one input plug of the device object corresponding to the controlled apparatus with the pass-through function, and
wherein an output plug of the function object corresponding to the pass-through function is connected to no output plug of the device object corresponding to the controlled apparatus with the pass-through function, or is connectable to at least one output plug of the device object corresponding to the controlled apparatus with the pass-through function.

The 21st invention of the present invention (corresponding to claim 21) is a controlling method according to the 20th invention, wherein the output plug of the function object corresponding to the pass-through function is not connected to a plug of the function object corresponding to another function element of the controlled apparatus with the pass-through function.

The 22nd invention of the present invention (corresponding to claim 22) is a controlling method of controlling a controlled apparatus by a controlling apparatus controlling at least one controlled apparatus based on an object-oriented model,
said controlling apparatus comprising controlling means of providing an instruction to a device object corresponding to the controlled apparatus and/or a function object corresponding to each function element of the controlled apparatus to thereby control the controlled apparatus corresponding to the device object and/or the function element of the controlled apparatus corresponding to the object,
wherein when the function element is controlled so as to output a content in one or a plurality of forms, an output plug of the function object corresponding to the controlled function element is assigned to the content by the controlling means.

The 23rd invention of the present invention (corresponding to claim 23) is a program for allowing a computer to perform all or some of the step, of the controlling method according to the 19th invention, of providing the function object corresponding to the pass-through function for the device object corresponding to the controlled apparatus with the pass-through function having as the function element thereof the stream pass-through function to output a stream input from the input terminal from the output terminal as it is or after changing its form.

The 24th invention of the present invention (corresponding to claim 24) is a program for allowing a computer to perform all or some of the following steps of the controlling method according to the 20th invention: the step of always connecting the input plug of the function object corresponding to the pass-through function to one input plug of the device object corresponding to the controlled apparatus with the pass-through function; and
the step of connecting the output plug of the function object corresponding to the pass-through function to no output plug of the device object corresponding to the controlled apparatus with the pass-through function, or making the output plug of the function object corresponding to the pass-through function connectable to at least one output plug of the device object corresponding to the controlled apparatus with the pass-through function.

The 25th invention of the present invention (corresponding to claim 25) is a program for allowing a computer to perform all or some of the step, of the controlling method according to the 21st invention, of not connecting the output plug of the function object corresponding to the pass-through function to a plug of the function object corresponding to another function element of the controlled apparatus with the pass-through function.

The 26th invention of the present invention (corresponding to claim 26) is a program for allowing a computer to perform all or some of the step, of the controlling method according to the 22nd invention, of assigning, when the function element is controlled so as to output a content in one or a plurality of forms, the output plug of the function object corresponding to the controlled function element to the content by the controlling means.

The 27th invention of the present invention is a medium processable by a computer, said medium holding a program for allowing a computer to perform all or some of the step, of the controlling method according to the 19th invention, of providing the function object corresponding to the pass-through function for the device object corresponding to the controlled apparatus with the pass-through function having as the function element thereof the stream pass-through function to output a stream input from the input terminal from the output terminal as it is or after changing its form.

The 28th invention of the present invention (corresponding to claim 28) is a medium processable by a computer, said medium holding a program for allowing a computer to perform all or some of the following steps of the controlling method according to the 20th invention: the step of always connecting the input plug of the function object corresponding to the pass-through function to one input plug of the device object corresponding to the controlled apparatus with the pass-through function; and
the step of connecting the output plug of the function object corresponding to the pass-through function to no output plug of the device object corresponding to the controlled apparatus with the pass-through function, or making the output plug of the function object corresponding to the pass-through function connectable to at least one output plug of the device object corresponding to the controlled apparatus with the pass-through function.

The 29th invention of the present invention (corresponding to claim 29) is a medium processable by a computer, said medium holding a program for allowing a computer to perform all or some of the step, of the controlling method according to the 21st invention, of not connecting the output plug of the function object corresponding to the pass-through function to a plug of the function object corresponding to another function element of the controlled apparatus with the pass-through function.

The 30th invention of the present invention (corresponding to claim 30) is a program for allowing a computer to perform all or some of the step, of the controlling method according to the 22nd invention, of assigning, when the function element is controlled so as to output a content in one or a plurality of forms, the output plug of the function object corresponding to the controlled function element to the content by the controlling means.

### BRIEF DESCRIPTION OF DRAWINGS

FIG. 1 is a view showing the structure of a controlling system of first to fourth embodiments of the present invention.
FIG. 2 is a view showing an actual machine and software objects corresponding to the actual machine in the first embodiment of the present invention.
FIG. 3 is a view showing the actual machine and the software objects corresponding to the actual machine in the first embodiment of the present invention.
FIG. 4 is a view showing stream types set for connections between Dcms and Fcms in the second embodiment of the present invention.
FIG. 5 is a view showing an example of APIs for setting the stream types for the connections in the second embodiment of the present invention.
FIG. 6 is a view showing stream types set for connections between Dcms and Fcms in the third embodiment of the present invention.
FIG. 7 is a view showing an example of APIs for setting the stream types for the connections in the third embodiment of the present invention.
FIG. 8 is a view showing stream types set for connections between Dcms and Fcms in the fourth embodiment of the present invention.
FIG. 9 is a view showing an example of APIs for setting the stream types of the connections in the fourth embodiment of the present invention.
FIG. 10 is a view showing a stream type set for connections in the fifth embodiment of the present invention.
FIG. 11 is a view showing the structure of the controlling system based on the HAVi standard in the prior art.
FIG. 12 is a view of assistance in explaining the connection according to the HAVi standard in the prior art.
(a) of FIG. 13 is a view of assistance in explaining the limitation of the HAVi standard in the prior art. (b) of FIG. 13 is a view of assistance in explaining the connection via the outside of the AV apparatus and the connection via the inside of the AV apparatus in the prior art. (c) of FIG. 13 is a view of assistance in explaining that the connection via the inside of the AV apparatus cannot be expressed by the HAVi standard in the prior art.
FIG. 14 is a view of assistance in explaining that a stream type is set for each connection according to the HAVi standard in the prior art.

### EXPLANATION OF REFERENCE NUMERALS

30 D-VHS
30a D-VHS Dcm
31 VCR
31a VCR Fcm
32 Tuner
32a Tuner Fcm
42 Null Fcm
43 Null Fcm
68 Cable
69 Cable
75 D-VHS
75a D-VHS Dcm
76 VCR
76a VCR Fcm
77 Tuner
77a Tuner Fcm
78 Null Fcm
79 Null Fcm
80 Application software program
81 GUI
82 TV
110 D-VHS main unit Dcm
111 D-VHS Fcm
112 VHS main unit Dcm
113 VHS Fcm
114 TV Dcm
115 Display Fcm
116 Fcm output plug
117 Dcm output plug
118 Dcm output plug
119 Dcm input plug
121 Dcm input plug
120 Fcm input plug
122 Fcm input plug

### BEST MODE FOR CARRYING OUT THE INVENTION

Hereinafter, embodiments of the present invention will be described with reference to the drawings.

### (First Embodiment)

First, a first embodiment will be described.

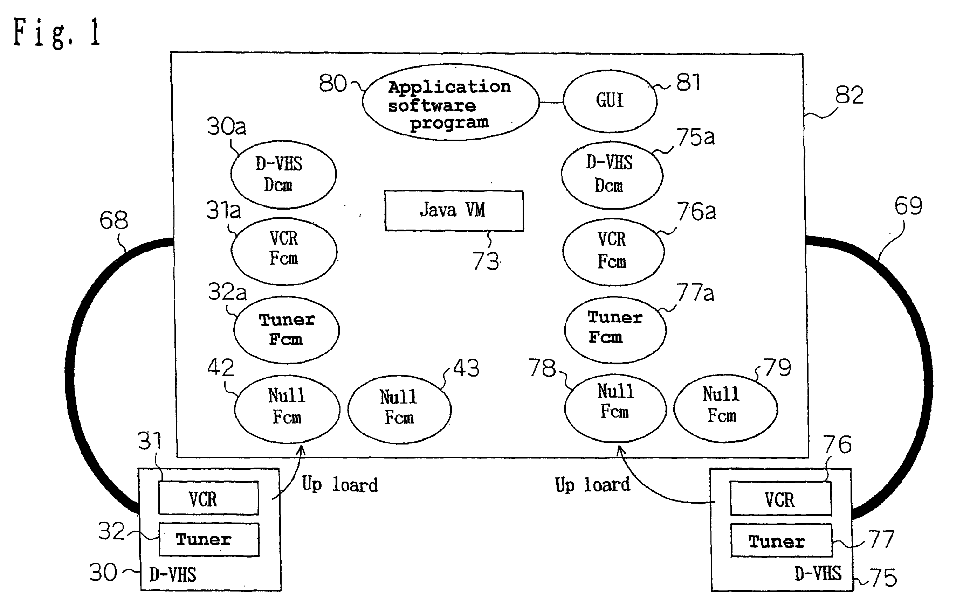

FIG. 1 shows a controlling system of the first embodiment. The controlling system of the present embodiment controls AV apparatuses based on the HAVi standard like that of the prior art.

The controlling system comprises a TV 82, a D-VHS 30 and a D-VHS 75. These AV apparatuses are interconnected by IEEE 1394 cables 68 and 69 like in the prior art.

The TV 82 is a television having a function of a controlling apparatus that controls the D-VHSs 30 and 75.

The D-VHS 30 has a VCR 31 that records or plays back a stream of a broadcast program or the like onto or from a tape medium, and a tuner 32 that receives broadcast waves , demodulates them and outputs a stream of a broadcast program. That is, the D-VHS 30 as a unit has the VCR 31 and the tuner 32 as elements (subunits) . Moreover, the D-VHS 30 has two apparatus input terminals and two apparatus output terminals, and is capable of a through connection to output a signal input from an apparatus input terminal to an apparatus output terminal as it is.

Likewise, the D-VHS 75 has a VCR 76 that records or plays back a stream of a broadcast program or the like onto or from a tape medium, and a tuner 77 that receives broadcast waves, demodulates them and outputs a stream of a broadcast program. That is, the D-VHS 75 as a unit has the VCR 76 and the tuner 77 as elements (subunits). Moreover, like the D-VHS 30, the D-VHS 75 has two apparatus input terminals and two apparatus output terminals, and is capable of a through connection to output a signal input from an apparatus input terminal to an apparatus output terminal as it is.

The software structure of the TV 82 is as follows: The TV 82 has a GUI 81, an application software program 80, a D-VHS Dcm 30a, a VCR Fcm 31a, a tuner Fcm 32a, a Null Fcm 42, a Null Fcm 43, a D-VHS Dcm 75a, a VCR Fcm 76a, a tuner Fcm 77a, a Null Fcm 78, a Null Fcm 79 and a Java VM 73.

The GUI 81 is a graphical user interface described in Java for the user to operate AV apparatuses by use of a remote control of the TV 70.

The application software program 80 is a software program described in Java for controlling AV apparatuses such as the D-VHSs 30 and 75 connected to the TV 82 based on an instruction from the user.

The D-VHS Dcm 30a is a Dcm corresponding to the D-VHS 30, the VCR Fcm 31a is an Fcm corresponding to the VCR 31, and the tuner Fcm 32a is an Fcm corresponding to the tuner 32.

The Null Fcm 42 and the Null Fcm 43 are Fcms introduced to express the through connection of the D-VHS 30.

Likewise, the D-VHS Dcm 75a is an Fcm corresponding to the D-VHS 75, the VCR Fcm 76a is an Fcm corresponding to the VCR 76, and the tuner Fcm 77a is an Fcm corresponding to the tuner 77.

The Null Fcm 78 and the Null Fcm 79 are Fcms introduced to express the through connection of the D-VHS 75.

Dcms and Fcms have been already described in the prior art.

The D-VHS 30 stores not only information for the TV 82 to create the Dcm and the Fcms corresponding to the D-VHS 30 but also information for the TV 82 to create the Null Fcms 42 and 43, and has a function to communicate with the TV 82.

Likewise, the D-VHS 75 stores not only information for the TV 82 to create the Dcm and the Fcms corresponding to the D-VHS 75 but also information for the TV 82 to create the Null Fcms 78 and 79, and has a function to communicate with the TV 82.

The Java VM 73 is, like the one described in the prior art, an interpreter that reads in a program code (bytecode) described in Java and not depending on the model, converts it to a binary code depending on the model, and executes the program code.

The TV 82 of the present embodiment is an example of the controlling apparatus of the present invention. The D-VHSs 30 and 75 of the present embodiment are examples of the controlled apparatus of the present invention. The D-VHSs 30 and 75 of the present embodiment are examples of the controlled apparatus with a pass-through function of the present invention. The NULL Fcms 42, 43, 78 and 79 of the present embodiment are examples of the function object corresponding to the pass-through function of the present invention. The D-VHS Dcms 30a and 75a of the present embodiment are examples of the device object of the present invention. The VCR Fcm 31a, the tuner Fcm 32a, the VCR Fcm 76a and the tuner Fcm 77a of the present embodiment are examples of the function object of the present invention. The application software program 80 of the present embodiment is an example of the controlling means of the present embodiment. The VCR 31, the tuner 32, the VCR 76, the tuner 77 and the pass-through function of the present embodiment are examples of the function element of the present invention. The through connection of the present embodiment is an example of the pass-through function of the present invention.

Next, the operation of the controlling system will be described.

First, it is assumed that the D-VHS 30 has not been connected to the TV 82 by the cable 68 yet.

Under this condition, the Dcm corresponding to the D-VHS 30 and the Fcms corresponding to the elements of the D-VHS 30 are absent in the TV 82.

Then, the user connects the D-VHS 30 to the TV 82 by the cable 68.

Then, the TV 82 and the D-VHS 30 communicate with each other so that the information for creating the D-VHS Dcm 30a, the VCR Fcm 31a, the tuner Fcm 32a and the Null Fcms 42 and 43 is uploaded from the D-VHS 30 to the TV 82.

The TV 82 creates the Dcm and the Fcms based on the information uploaded from the D-VHS 30.

Likewise, when the D-VHS 75 has not been connected to the TV 82 by the cable 69 yet, the Dcm corresponding to the D-VHS 75 and the Fcms corresponding to the elements of the D-VHS 75 are absent in the TV 82.

When the user connects the D-VHS 75 to the TV 82 by the cable 69, similarly to the above-described case, the D-VHS 75a, the VCR Fcm 76a, the tuner Fcm 77a and the NULL Fcms 78 and 79 are created in the TV 82.

That is, unlike in the prior art, in the present embodiment, the Null Fcms 42 and 43 which are Fcms corresponding to the through connection of the D-VHS 30 are created. Moreover, the Null Fcms 78 and 79 which are Fcms corresponding to the through connection of the D-VHS 75 are created.

According to the HAVi standard, when a content is output as a stream from an AV apparatus to a second AV apparatus, first, connection paths from the AV apparatus to the second AV apparatus are formed. Next, how the connection paths are formed to express the through connection will be described.

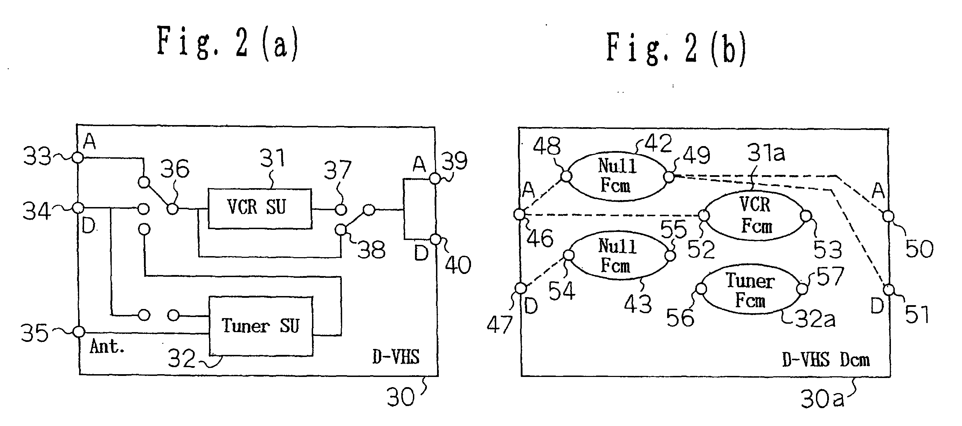

The hardware structure of the D-VHS 30 is shown in (a) of FIG. 2. The structure of the Dcm and the Fcms corresponding to (a) of FIG. 2 is shown in (b) of FIG. 2.

(a) of FIG. 2 shows a case where a stream input from an input terminal A33 is output as it is from an output terminal A39 and an output terminal D40 via 36 and 38 while the VCR 31 is recording the stream input from the input terminal A33 onto a tape medium.

Here, the input terminal A33 is a terminal for inputting analog signals, and the input terminal D34 is a terminal for inputting digital signals. The output terminal A39 is a terminal for outputting analog signals, and the output terminal D40 is a terminal for outputting digital signals.

(a) of FIG. 2 corresponds, for example, to a case where a stream being recorded is displayed on a TV or the like for monitoring while being recorded by the VCR 31.

In such a case, the connection paths of the Fcms and the Dcm are formed as shown in (b) of FIG. 2.

That is, an input plug 46A of the D-VHS Dcm 30a and an input plug 52 of the VCR Fcm 31a are connected together. Moreover, an output plug 49 of the Null Fcm 42 is connected to an output plug A50 of the D-VHS Dcm 30a and an output plug D51 of the D-VHS Dcm 30a. An output plug 53 of the VCR Fcm 31a, an input plug 56 and an output plug 57 of the tuner Fcm 32a and an output plug 55 of the Null Fcm 43 are connected to none of the plugs. The input plug A46 of the D-VHS Dcm 30a and an input plug 48 of the Null Fcm 42 are always connected together. Likewise, an input plug D47 of the D-VHS Dcm 30a and an input plug 54 of the Null Fcm 43 are always connected together.

By forming the connections as shown in (b) of FIG. 2, the case can be expressed where a stream input from the input terminal A33 of the D-VHS 30 is output as it is from the output terminal A39 and the output terminal D40 of the D-VHS 30 while the VCR 31 is recording the stream input from the input terminal A33 onto a tape medium as shown in (a) of FIG. 2.

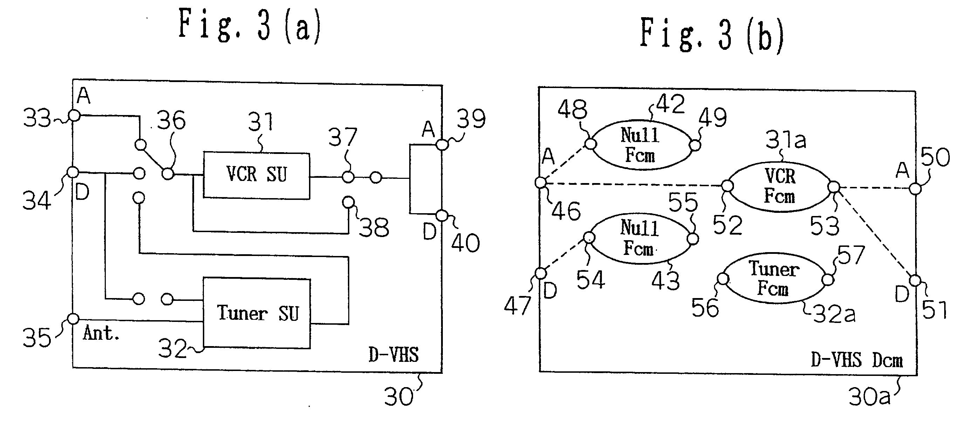

Next, other connection paths will be shown. That is, the hardware structure of the D-VHS 30 is shown in (a) of FIG. 3. Moreover, the structure of the Dcm and the Fcms corresponding to (a) of 32 is shown in (b) of FIG. 3.

(a) of FIG. 3 shows a case where the VCR 31 plays back the stream recorded on a tape medium and outputs the played back stream from the output terminal A39 and the output terminal D40. This corresponds, for example, to a case where a stream played back by the VCR 31 is displayed on a TV or the like for monitoring.

In such a case, the connection paths of the Fcms and the Dcm are formed as shown in (b) of FIG. 3.

That is, the input plug A46 of the D-VHS Dcm 30a and the input plug 52 of the VCR Fcm 31a are connected together. However, since a stream is played back by the VCR 31 in this case, no stream is input from the input terminal A33. Therefore, it is not always necessary to connect the input plug A46 and the input plug 52 of the VCR Fcm 31a together. Moreover, the output plug 53 of the VCR Fcm 31a is connected to the output plug A50 of the D-VHS Dcm 30a and the output plug D51 of the D-VHS Dcm 30a. The output plug 49 of the Null Fcm 42, the output plug 55 of the Null Fcm 43 and the input plug 56 and the output plug 57 of the tuner Fcm 32a are connected to none of the plugs. The input plug A46 of the D-VHS Dcm 30a and the input plug 48 of the Null Fcm 42 are always connected together. Likewise, the input plug D47 of the D-VHS Dcm 30a and the input plug 54 of the Null Fcm 43 are always connected together.

By forming the connections as shown in (b) of FIG. 3, the case can be expressed where a stream recorded on a tape medium is played back by the VCR 31 and the played back stream is output from the output terminal A39 and the output terminal D40 of the D-VHS 30 as shown in (a) of FIG. 3.

As described above, the through connection can be expressed by introducing the Null Fcms 42 and 43.

Such Null Fcms have one input Fcm plug and one output Fcm plug, and neither process contents nor change stream formats.

The input Fcm plugs of the Null Fcms are always connected to one of the Dcm plugs. That is, when the TV 82 creates the Dcm and the Fcms by use of the information uploaded from the D-VHS 30, the input Fcm plugs of the NULL Fcms 42 and 43 are connected to the input Dcm plug A46 and the input Dcm plug D47 of the D-VHS Dcm 30a, respectively, and are always connected thereto after that. Thus, since it is unnecessary to specify the connection of the input Fcm plugs of the Null Fcms, only small labor is required for forming the connection.

The output Fcm plugs of the NULL Fcms may be connected to none of the plugs or may be connected to one or more output Dcm plugs. To which output Dcm plug the output Fcm plugs of the Null Fcms are actually connected is decided according to the contents of the processing of the stream.

Moreover, the output Fcm plugs of the NULL Fcms cannot be connected to the other input Fcm plugs.

While Fcms have an ID for identifying the kind, NULL Fcms also have an ID for a distinction from other kinds of Fcms.

Since such Null Fcms are introduced, the through connection can be clearly shown to the application software program 80.

Although it is considered to express the through connection by providing a through mode function representative of the through connection in the Fcms of the VCR 31 or the like instead of introducing the Null Fcms, to do this, it is necessary to provide the Fcms with a through mode rule and provide an API setting the through mode. On the contrary, when the NULL Fcms are introduced, since it is unnecessary to change the API for making the connection, the through connection can be realized without a loss of the advantage of the HAVi standard that the connection can be made with a simple API.

While in the present embodiment, the Null Fcms neither process contents nor change stream formats, the present invention is not limited thereto. The Null Fcms may change stream formats. For example, the Null Fcms may output a stream input in analog form after changing it to digital form. Moreover, the Null Fcms may output a stream input in digital form after changing it to analog form.

Further, the controlling apparatus of the present invention is not limited to the TV 82 of the present embodiment, but may be any AV apparatus that is compliant with the HAVi standard such as an STB (set-top box).

Further, the controlled apparatus of the present invention is not limited to the D-VHS 30 and the D-VHS 75 of the present embodiment, but may be any AV apparatus that is compliant with the HAVi standard and controlled by the controlling apparatus of the present invention such as a VTR, an STB or a TV.

### (Second Embodiment)

Next, a second embodiment will be described.

In the present embodiment, how stream types are set for connections formed by interconnecting the plugs of Dcms and Fcms will be described.

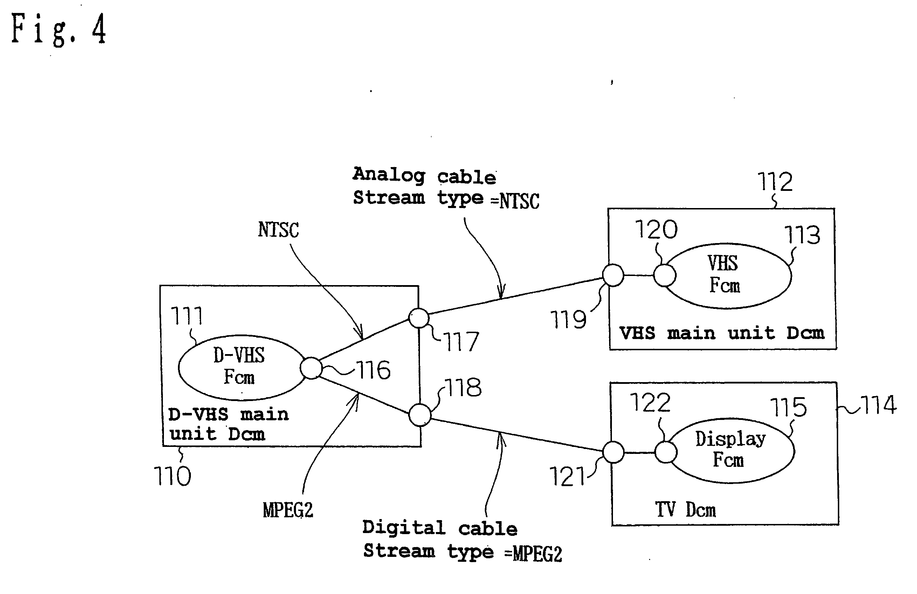

FIG. 4 shows connections formed between Dcms and Fcms in the present embodiment. FIG. 4 shows a case where one content is output in both analog and digital forms which case is modeled.

In FIG. 4, the following are provided: a D-VHS main unit Dcm 110; a D-VHS Fcm 111; a VHS main unit Dcm 112; a VHS Fcm 113; a TV Dcm 114; and a display Fcm 115. These Dcms and Fcms are created in the TV 82 by AV apparatuses such as a D-VHS main unit and a VHS main unit being connected to the TV 82 shown in FIG. 1 in the first embodiment, and are held in the TV 82.

The D-VHS main unit Dcm 110 has output Dcm plugs 117 and 118. The D-VHS Fcm 111 has an output Fcm plug 116.

The VHS main unit Dcm 112 has an input Dcm plug 119. The VHS Fcm 113 has an input Fcm plug 120.

The TV Dcm 114 has an input Dcm plug 121. The display Fcm 122 has an input Fcm plug.

Next, the operation of the present embodiment will be described.

First, to handle the case where one content is output in both analog and digital forms, one Fcm plug is assigned to one content, and the API is defined so that a plug can be shared by connections of different stream types.

That is, the output Fcm plug 116 of the D-VHS Fcm 111 is shared by a case where the stream type is NTSC and a case where the stream type is MPEG2.

The output Fcm plug 116, the output Dcm plug 117, the input Dcm plug 119 and the input Fcm plug 120 form one connection, and NTSC is assigned as the stream type of this connection.

Moreover, the output Fcm plug 116, the output Dcm plug 118, the input Dcm plug 121 and the input Fcm plug 122 form one connection, and MPEG2 is assigned as the stream type of this connection.

By thus modeling the connections of the AV apparatus, the correspondence between the content and the stream can be simplified to a one-to-one correspondence. Moreover, since AV apparatuses capable of outputting one content in a plurality of forms such as analog and digital forms at the same time can be handled with a simple model, connection can be made without depending on mounting.

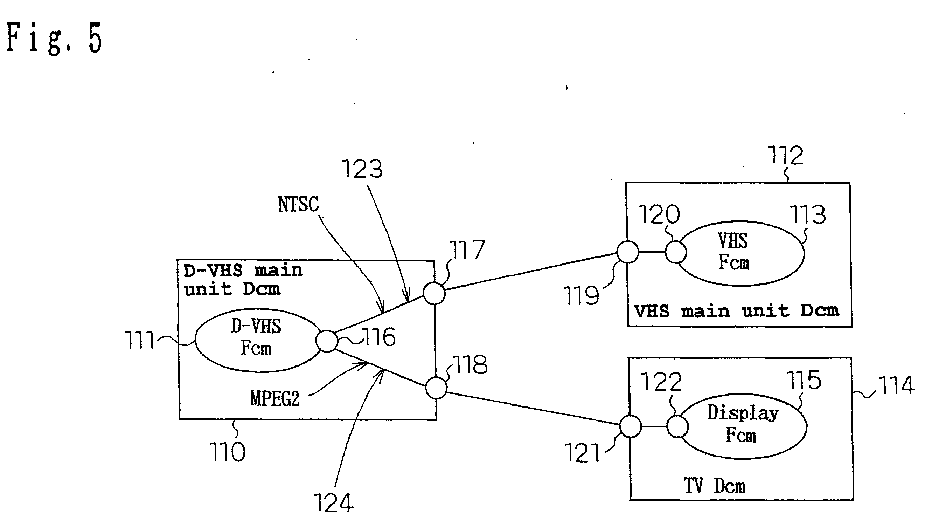

FIG. 5 shows the provided APIs. The stream type setting API (NTSC) 123 sets NTSC as the stream type of the connection path from the output Fcm plug 116 via the output Dcm plug 117 and the input Dcm plug 119 to the input Fcm plug 120.

Likewise, the stream type setting API (MPEG2) 124 sets MPEG2 as the stream type of the connection path from the output Fcm plug 116 via the output Dcm plug 118 and the input Dcm plug 121 to the input Fcm plug 122.

Specifically, for example, the APIs can be defined as SetStreamTypeId (plug 1, plug 2, stream type). Here, the parenthesized are arguments that the APIs receive, and it is indicated that the stream type of the connection between "plug 1" and "plug 2" is set to "stream type."

When the stream type of the connection between the output Fcm plug 116 and the output Dcm plug 117 is set to NTSC, the API is SetStreamTypeId (output Fcmplug 116, output Dcm plug 117, NTSC). Likewise, when the stream type of the connection between the output Fcmplug 116 and the output Dcm plug 118 is set to MPEG2, the API is SetStreamTypeId (output Fcm plug 116, output Dcm plug 118, MPEG2).

Conventionally, one stream type is set for one plug. However, in the present embodiment, unlike this, an API that specifies a Dcm plug and an Fcm plug and sets a stream type for the connection therebetween such as SetStreamTypeId (plug 1, plug 2, stream type) is provided to thereby set one stream type for the part of one connection.

By doing this, stream types can be managed with a similar simplicity to that of the conventional method setting one stream type for the part of one plug. Further, one plug can be shared by connections of different stream types.

### (Third Embodiment)

Next, a third embodiment will be described.

In the present embodiment, it will be described how the stream type is set for connections formed by interconnecting the plugs of Dcms and Fcms.

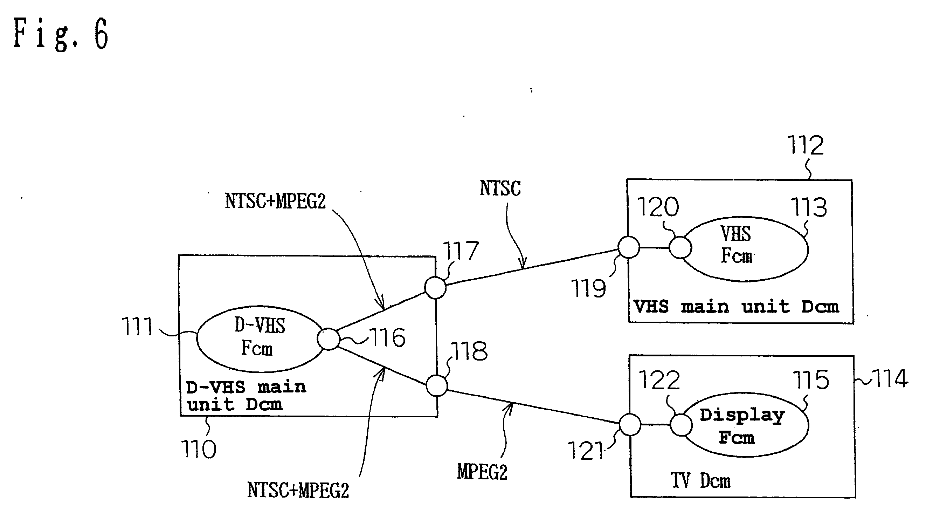

FIG. 6 shows connections formed between Dcms and Fcms in the present embodiment. FIG. 6 shows a case where one content is output in both analog and digital forms which case is modeled like the second embodiment.

The structure of the Dcms and the Fcms in FIG. 6 will not be described because they are similar to that of the second embodiment.

Next, the operation of the present embodiment will be described mainly with respect to differences from the second embodiment.

In the present embodiment, like in the second embodiment, to handle the case where one content is output in both analog and digital forms, one Fcm plug is assigned to one content, and the API is defined so that a plug can be shared by connections of different stream types.

Differences from the second embodiment are as follows: Both NTSC and MPEG2 are set as the stream type of the connection between the output Fcm plug 116 of the D-VHS Fcm 111 and the output Dcm plug 117 of the D-VHS main unit Dcm 110. Likewise, both NTSC and MPEG 2 are set as the stream type of the connection between the output Fcm plug 116 of the D-VHS Fcm 111 and the output Dcm plug 118 of the D-VHS main unit Dcm 110. That is, when the apparatuses are capable of outputting a plurality of stream types, all of these stream types are set as the stream type of the connections inside the apparatus.

On the other hand, NTSC is set as the stream type of the connection between the output Dcm plug 117 of the D-VHS main unit Dcm 110 and the input Dcm plug 119 of the VHS main unit Dcm 112. Likewise, MPEG2 is set as the stream type of the connection between the output Dcm plug 118 of the D-VHS main unit Dcm 110 and the input Dcm plug 121 of the TV Dcm 114. That is, for the connections outside the apparatus, the stream type to be output is individually set.

By thus modeling the connections of the AV apparatus, the correspondence between the content and the stream can be simplified to a one-to-one correspondence like in the second embodiment. Moreover, since AV apparatuses capable of outputting one content in a plurality of forms such as analog and digital forms at the same time can be handled with a simple model, connection canbe made without depending on mounting.

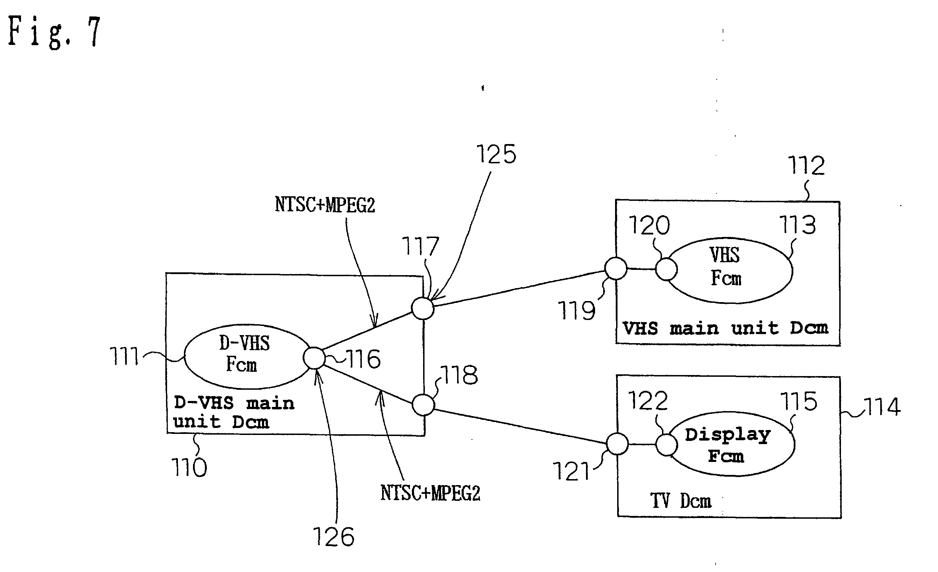

FIG. 7 shows the provided APIs. The stream type setting API (NTSC+MPEG2) 126 sets NTSC and MPEG2 for the output Fcm plug 116 as the stream type.

The stream type setting API (MPEG2) 125 sets MPEG2 for the output Dcm plug 117 as the stream type.

Specifically, the APIs can be defined as SetStreamTypeId (plug, stream type). Here, the parenthesized are arguments that the APIs receive, and it is indicated that the stream type is set to "stream type" for the "plug." When MPEG2 and NTSC are set for the output Fcm plug 116 as the stream type, the API is SetStreamTypeId (output Fcm plug 116, {MPEG2, NTSC}). When NTSC is set for the output Dcm plug 117 as the stream type, the API is SetStreamTypeId (output Dcm plug 117, NTSC). When MPEG2 is set for the output Dcm plug 118 as the stream type, the API is SetStreamTypeId (output Dcm plug 118, MPEG2).

By thus providing an API that specifies an output Fcm plug and sets a plurality of stream types and an API that specifies an output Dcm plug and selects a stream type, one stream type is set for one connection outside the apparatus.

In the present embodiment, like in the second embodiment, connections of different stream types can share a plug.

### (Fourth Embodiment)

Next, a fourth embodiment will be described.

In the present embodiment, it will be described how the stream type is set for connections formed by interconnecting the plugs of Dcms and Fcms.

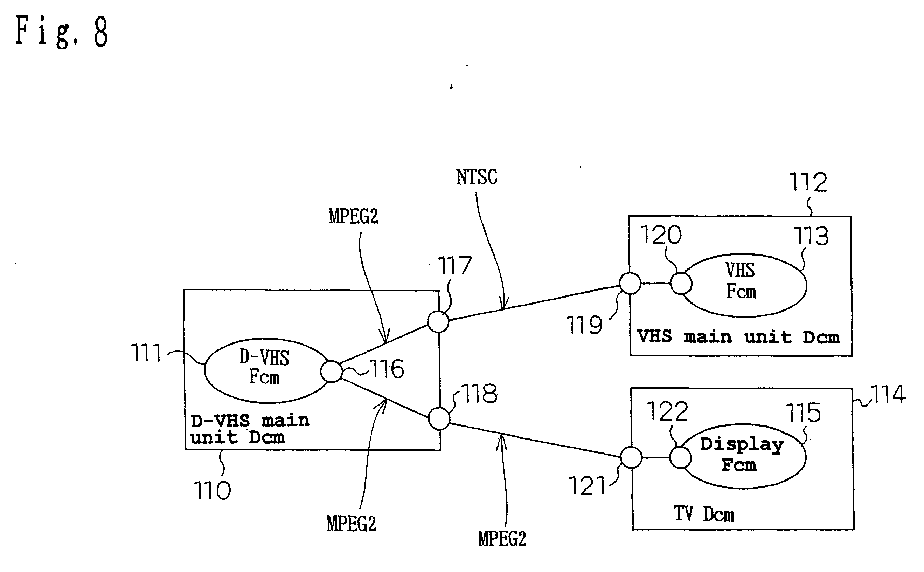

FIG. 8 shows connections formed between Dcms and Fcms in the present embodiment. FIG. 8 shows a case where one content is output in both analog and digital forms which case is modeled like the second embodiment.

The structure of the Dcms and the Fcms in FIG. 8 will not be described because they are similar to that of the second embodiment.

Next, the operation of the present embodiment will be described mainly with respect to differences from the second embodiment.

In the present embodiment, like in the second embodiment, to handle the case where one content is output in both analog and digital forms, one Fcm plug is assigned to one content, and the API is defined so that a plug can be shared by connections of different stream types.

Differences from the second embodiment are as follows: When the content played back from a tape medium and output is in MPEG2 form, MPEG2 is set as the stream type of the connection between the output Fcm plug 116 of the D-VHS Fcm 111 and the output Dcm plug 117 of the D-VHS main unit Dcm 110. Likewise, MPEG2 is set as the stream type of the connection between the output Fcm plug 116 of the D-VHS Fcm 111 and the output Dcm plug 118 of the D-VHS main unit Dcm 110. That is, the stream type of the content is automatically set as the stream type of the connections inside the apparatus.

On the other hand, NTSC is set as the stream type of the connection between the output Dcm plug 117 of the D-VHS main unit Dcm 110 and the input Dcm plug 119 of the VHS main unit Dcm 112. Likewise, MPEG2 is set as the stream type of the connection between the output Dcm plug 118 of the D-VHS main unit Dcm 110 and the input Dcm plug 121 of the TV Dcm 114. That is, for the connections outside the apparatus, the stream type to be output is individually set.

By thus modeling the connections of the AV apparatus, the correspondence between the content and the stream can be simplified to a one-to-one correspondence like in the second embodiment. Moreover, since AV apparatuses capable of outputting one content in a plurality of forms such as analog and digital forms at the same time can be handled with a simple model, connection can be made without depending on mounting.

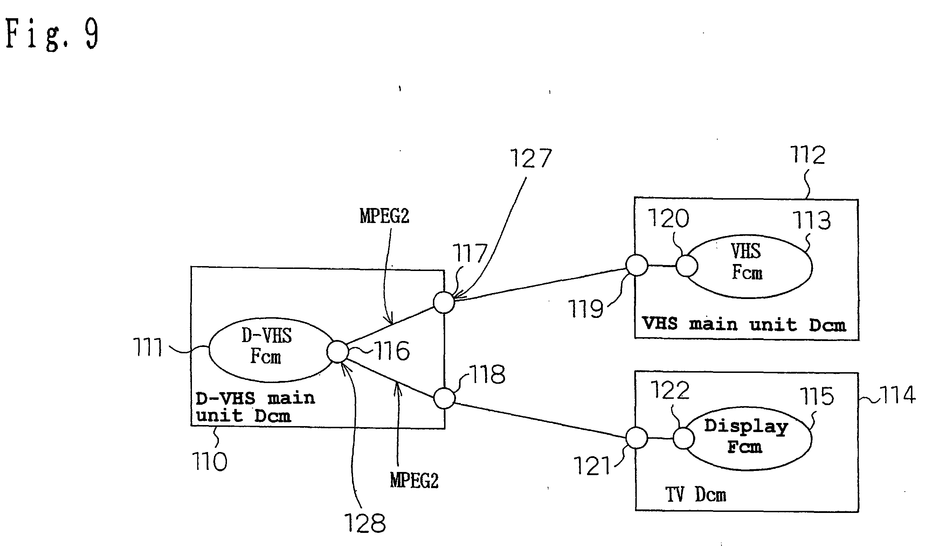

FIG. 9 shows the provided APIs. The stream type converting API (NTSC) 127 converts the stream type of the output Dcm plug 117 to NTSC.

The stream condition acquiring API 128 acquires the condition of the stream output from the output Fcm plug 116.

Specifically, the APIs can be defined as SetStreamTypeId (plug, stream type). Here, the parenthesized are arguments that the APIs receive, and it is indicated that the stream type is converted to "stream type" for the "plug." When the conversion is possible, SUCCESS is returned, and the stream type is converted to "stream type." When the stream type of the output Dcm plug 117 is converted to NTSC, the API is SetStreamTypeId (output Dcm plug 117, NTSC). When the conversion is possible, SUCCESS is returned, and the stream type is converted to NTSC.

Moreover, the APIs can be defined as GetStreamTypeId (plug). Here, the parenthesized is an argument that the APIs receive, and it is indicated that the condition of the "plug" is acquired. When the condition of the output Fcmplug 116 is acquired, the API is GetStreamTypeId (output Fcm plug 116). Then, the stream type of the output Fcm plug 116 is returned. In the present embodiment, since the stream type of the content is automatically set as the stream type of the output Fcm plug 116, no API for setting the stream type is provided.

By thus providing the API that specifies an output Dcm plug and converts the stream type, one stream type is set for one connection outside the apparatus, so that in the present embodiment, connections of different stream types can share a plug like in the second embodiment.

### (Fifth Embodiment)

Next, a fifth embodiment will be described.

In the present embodiment, it will be described how the stream type is set for connections formed by interconnecting the plugs of Fcms in the same device.

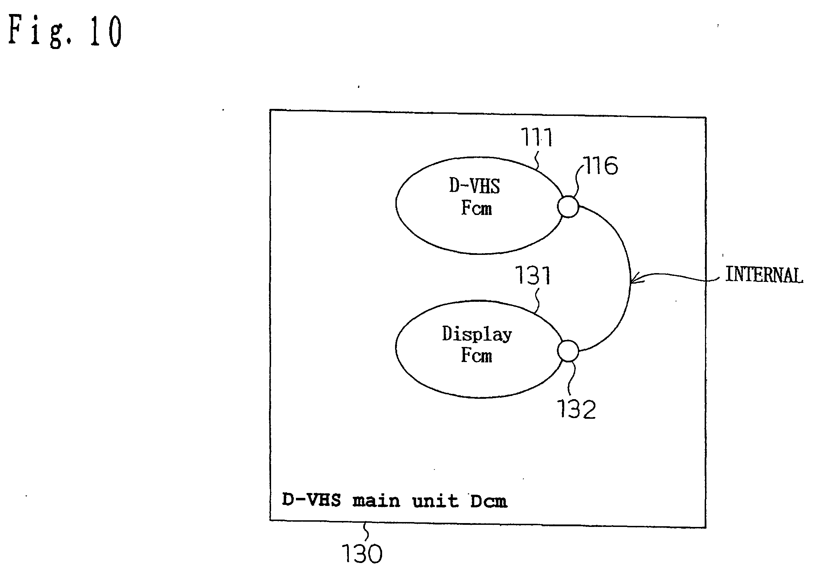

FIG. 10 shows a Dcm and Fcms in the present embodiment. In FIG. 10, the D-VHS main unit Dcm 130 has the D-VHS Fcm 111 and a display Fcm 132. That is, this is a case where the D-VHS main unit has the function of a D-VHS and the function of displaying signals on the monitor which case is modeled, and a scene is shown where a connection is formed between the output Fcm plug 116 of the D-VHS Fcm 111 and an input Fcm plug 132 of the display Fcm 131.

Next, the operation of the present embodiment will be described mainly with respect to differences from the second embodiment.

In the present embodiment, a type INTERNAL is introduced as a stream type representative of connections between Fcms in the same device. That is, the stream type of the connection between the output Fcm plug 116 of the D-VHS Fcm 111 and the input Fcm plug 132 of the display Fcm 131 is set to the type INTERNAL representative of connections inside the apparatus.

That is, INTERNAL representative of connections inside the apparatus is set for the connection between Fcms in the same apparatus.

For the connections outside the apparatus, the stream type is set in a similar manner to that of the above-described embodiments.

Setting INTERNAL as the stream type is automatically performed when Fcms in the same apparatus are connected. That is, for connections between Fcms in the same apparatus, it is unnecessary to set the stream type by use of the API like in the above-described embodiments.

That is, for connections inside the apparatus, stream type management is unnecessary. Therefore, by doing this, stream type setting can be performed without any trouble.

Moreover, by introducing INTERNAL as the stream type, Fcms that cannot be connected to the outside can be expressed as well.

The controlling apparatus of the present invention is not limited to the one that controls a controlled apparatus such as the D-VHS 30 based on the HAVi standard like the TV 82 in the present embodiment, but may be any apparatus that controls a controlled apparatus based on an object-oriented model.

Further, a medium holding a program and/or data for allowing a computer to perform all or some of the means of the controlling apparatus or the controlled apparatus of the present invention and all or some of the functions of the objects which medium is characterized by being processable by a computer also belongs to the present invention.

Further, information aggregate characterized by being a program and/or data for allowing a computer to perform all or some of the means of the controlling apparatus or the controlled apparatus of the present invention and all or some of the functions of the objects also belongs to the present invention.

Further, the data of the present invention includes data structures, data formats and data kinds. The medium of the present invention includes recording media such as ROMs, transmission media such as the Internet and transmission media such as light, radio waves and sound waves. The holding medium of the present invention includes, for example, recording media where a program and/or data is recorded and transmission media for transmitting a program and/or data. Being processable by a computer in the present invention indicates, for example, being readable by a computer in the case of recording media such as ROMs, and includes that the program and/or data to be transmitted can be handled by a computer as a result of transmission in the case of transmission media. The information aggregate of the present invention includes, for example, software such as a program and/or data.

Further, a program recording medium where a program and/or data for allowing a computer to perform all or some of the functions of all or some of the means of the controlling system described in any of the above-described embodiments is recorded is readable by a computer, and may be a program recording medium where the program and/or data being read performs the functions in cooperation with the computer.

### INDUSTRIAL APPLICABILITY

As is apparent from the description given above, the present invention can provide a controlling apparatus capable of clearly showing a situation that a signal input from an input terminal of an AV apparatus is output from an output terminal of the same AV apparatus as it is or after its form is converted, a controlled apparatus with a pass-through function, a controlled apparatus, a controlling method, a medium, and a program.

Moreover, the present invention can provide a controlling apparatus in which the API is not complicated even when one content is output in a plurality of stream types, a controlled apparatus with a pass-through function, a controlled apparatus, a controlling method, a medium, and a program.

Moreover, the present invention can provide a controlling apparatus in which the content management is not complicated even when a plurality of contents is output at the same time, a controlled apparatus with a pass-through function, a controlled apparatus, a controlling method, a medium, and a program.

Moreover, the present invention can provide a controlling apparatus in which how many contents are actually sent out can be determined only by the connection form, a controlled apparatus with a pass-through function, a controlled apparatus, a controlling method, a medium, and a program.

## Claims

1. A controlling apparatus controlling at least one controlled apparatus based on an object-oriented model,
said controlling apparatus comprising controlling means of providing an instruction to a device object corresponding to the controlled apparatus and/or a function object corresponding to each function element of the controlled apparatus to thereby control the controlled apparatus corresponding to the object and/or the function element of the controlled apparatus,
wherein for the device object corresponding to the controlled apparatus with a pass-through function having as a function element thereof a streampass-through function to output a stream input from an input terminal from an output terminal as it is or after changing its form,
a function object corresponding to the pass-through function is provided.

2. A controlling apparatus according to claim 1, wherein an input plug of the function object corresponding to the pass-through function is always connected to one input plug of the device object corresponding to the controlled apparatus with the pass-through function, and
wherein the output plug of the function object corresponding to the pass-through function is connected to no output plug of the device object corresponding to the controlled apparatus with the pass-through function, or is connectable to at least one output plug of the device object corresponding to the controlled apparatus with the pass-through function.

3. A controlling apparatus according to claim 2, wherein the output plug of the function object corresponding to the pass-through function is not connected to a plug of the function object corresponding to another function element of the controlled apparatus with the pass-through function.

4. A controlling apparatus according to claim 2, wherein the function object corresponding to the pass-through function has an ID for a distinction from other kinds of objects.

5. A controlling apparatus according to claim 3, wherein the function object corresponding to the pass-through function has an ID for a distinction from other kinds of objects.

6. A controlled apparatus with a pass-through function, controlled by the controlling apparatus according to any of claims 1 to 5,
said controlled apparatus with a pass-through function, having as a function element thereof a stream pass-through function to output a stream input from an input terminal from an output terminal as it is or after changing its form, and
comprising storing means of storing a function object corresponding to the pass-through function or information for creating the function object, and
wherein the function object or the information for creating the function object is read out by the controlling apparatus.

7. A controlling apparatus controlling at least one controlled apparatus based on an object-oriented model,
said controlling apparatus comprising controlling means of providing an instruction to a device object corresponding to the controlled apparatus and/or a function object corresponding to each function element of the controlled apparatus to thereby control the controlled apparatus corresponding to the device object and/or the function element of the controlled apparatus corresponding to the function object,
wherein when the function element is controlled so as to output a content in one or a plurality of forms, an output plug of the function object corresponding to the controlled function element is assigned to the content by the controlling means.

8. A controlling apparatus according to claim 7, wherein the form of the content which a connection between the assigned output plug and an output plug of the device object corresponding to the controlled apparatus having the function element has is set so as to be the same as a connection from the output plug of the device object corresponding to the controlled apparatus having the function element to an input plug of a device object corresponding to another controlled apparatus.

9. A controlling apparatus according to claim 8,
comprising an API specifying a plug of the device object and a plug of the function object and registering the form of the content for a connection between the plugs,
wherein the controlling means performs the setting by use of the API.

10. A controlling apparatus according to claim 7, wherein the controlling means sets all forms that the content can take, as a form of the content which a connection between the assigned output plug and an output plug of the device object corresponding to the controlled apparatus having the function element has, and
wherein as a form of the content which a connection from the output plug of the device object corresponding to the controlled apparatus having the function element to an input plug of a device object corresponding to another controlled apparatus has, a form of the content to be processed by the connection is set.

11. A controlling apparatus according to claim 7, wherein the controlling means sets one of forms that the content can take, as a form of the content which a connection between the assigned output plug and an output plug of the device object corresponding to the controlled apparatus having the function element has, and
wherein as a form of the content which a connection from the output plug of the device object corresponding to the controlled apparatus having the function element to an input plug of a device object corresponding to another controlled apparatus has, a form of the content to be processed by the connection is set.

12. A controlling apparatus according to claim 10,
comprising an API specifying a plug of the device object or a plug of the function object and registering the form of the content,
wherein the controlling means performs the setting by use of the API.

13. A controlling apparatus according to claim 11,
comprising an API specifying a plug of the device object or a plug of the function object and registering the form of the content,
wherein the controlling means performs the setting by use of the API.

14. A controlling apparatus according to claim 7, wherein when connecting plugs of function objects corresponding to at least two function elements belonging to the same controlled apparatus, the controlling means sets, as a form of the content, a form representing that the content is processed inside the apparatus.

15. A controlling apparatus according to claim 14, wherein the setting is performed without the use of the API setting the form of the content.

16. A controlled apparatus controlled by the controlling apparatus according to any of claims 7 to 15,
said controlled apparatus comprising storing means of storing a device object corresponding to the controlled apparatus and/or information for creating a function object corresponding to a function element of the controlled apparatus, and
wherein the object or the information for creating the object is read out by the controlling apparatus.

17. A controlling apparatus according to any of claims 1 to 5 and 7 to 15, wherein the controlling means is a program code described in a virtual language and capable of being executed without depending on a specific model.

18. A controlling apparatus according to any of claims 1 to 5 and 7 to 15, wherein the device object corresponding to the controlled apparatus is a DCM of a HAVi standard corresponding to the controlled apparatus, and the function object corresponding to a function element of the controlled apparatus is an FCM of the HAVi standard corresponding to the function element.

19. A controlling method of controlling a controlled apparatus by a controlling apparatus controlling at least one controlled apparatus based on an object-oriented model,
said controlling apparatus comprising controlling means of providing an instruction to a device object corresponding to the controlled apparatus and/or a function object corresponding to each function element of the controlled apparatus to thereby control the controlled apparatus corresponding to the object and/or the function element of the controlled apparatus,
wherein for a device object corresponding to a controlled apparatus with a pass-through function having as a function element thereof a streampass-through function to output a stream input from an input terminal from an output terminal as it is or after changing its form, a function object corresponding to the pass-through function is provided.

20. A controlling method according to claim 19, wherein an input plug of the function object corresponding to the pass-through function is always connected to one input plug of the device object corresponding to the controlled apparatus with the pass-through function, and
wherein an output plug of the function object corresponding to the pass-through function is connected to no output plug of the device object corresponding to the controlled apparatus with the pass-through function, or is connectable to at least one output plug of the device object corresponding to the controlled apparatus with the pass-through function.

21. A controlling method according to claim 20, wherein the output plug of the function object corresponding to the pass-through function is not connected to a plug of the function object corresponding to another function element of the controlled apparatus with the pass-through function.

22. A controlling method of controlling a controlled apparatus by a controlling apparatus controlling at least one controlled apparatus based on an obj ect-orientedmodel,
said controlling apparatus comprising controlling means of providing an instruction to a device object corresponding to the controlled apparatus and/or a function object corresponding to each function element of the controlled apparatus to thereby control the controlled apparatus corresponding to the device object and/or the function element of the controlled apparatus corresponding to the object,
wherein when the function element is controlled so as to output a content in one or a plurality of forms, an output plug of the function object corresponding to the controlled function element is assigned to the content by the controlling means.

23. A program for allowing a computer to perform all or some of the step, of the controlling method according to claim 19, of providing the function object corresponding to the pass-through function for the device object corresponding to the controlled apparatus with the pass-through function having as the function element thereof the stream pass-through function to output a stream input from the input terminal from the output terminal as it is or after changing its form.

24. A program for allowing a computer to perform all or some of the following steps of the controlling method according to claim 20: the step of always connecting the input plug of the function object corresponding to the pass-through function to one input plug of the device object corresponding to the controlled apparatus with the pass-through function; and
the step of connecting the output plug of the function object corresponding to the pass-through function to no output plug of the device object corresponding to the controlled apparatus with the pass-through function, or making the output plug of the function object corresponding to the pass-through function connectable to at least one output plug of the device object corresponding to the controlled apparatus with the pass-through function.

25. A program for allowing a computer to perform all or some of the step, of the controlling method according to claim 21, of not connecting the output plug of the function object corresponding to the pass-through function to a plug of the function object corresponding to another function element of the controlled apparatus with the pass-through function.

26. A program for allowing a computer to perform all or some of the step, of the controlling method according to claim 22, of assigning, when the function element is controlled so as to output a content in one or a plurality of forms, the output plug of the function object corresponding to the controlled function element to the content by the controlling means.

27. A medium processable by a computer, said medium holding a program for allowing a computer to perform all or some of the step, of the controlling method according to claim 19, of providing the function object corresponding to the pass-through function for the device object corresponding to the controlled apparatus with the pass-through function having as the function element thereof the stream pass-through function to output a stream input from the input terminal from the output terminal as it is or after changing its form.

28. A medium processable by a computer, said medium holding a program for allowing a computer to perform all or some of the following steps of the controlling method according to claim 20: the step of always connecting the input plug of the function object corresponding to the pass-through function to one input plug of the device object corresponding to the controlled apparatus with the pass-through function; and
the step of connecting the output plug of the function object corresponding to the pass-through function to no output plug of the device object corresponding to the controlled apparatus with the pass-through function, or making the output plug of the function object corresponding to the pass-through function connectable to at least one output plug of the device object corresponding to the controlled apparatus with the pass-through function.

29. A medium processable by a computer, said medium holding a program for allowing a computer to perform all or some of the step, of the controlling method according to claim 21, of not connecting the output plug of the function object corresponding to the pass-through function to a plug of the function object corresponding to another function element of the controlled apparatus with the pass-through function.

30. A program for allowing a computer to perform all or some of the step, of the controlling method according to claim 22, of assigning, when the function element is controlled so as to output a content in one or a plurality of forms, the output plug of the function object corresponding to the controlled function element to the content by the controlling means.
